# EUROPÄISCHE PATENTSCHRIFT

(11) **EP 0 896 956 B1**
(45) Veröffentlichungstag und Bekanntmachung des Hinweises auf die Patenterteilung: **27.08.2003**
(21) Anmeldenummer: 98111122.2
(22) Anmeldetag: 17.06.1998
(51) Int. Cl.: C03B 9/16, C03B 9/193

(54) **Pegelmechanismus für eine Vor- oder Fertigform einer Glasmaschine**
Plunger mechanism for blank or finish mould of glassware forming machine
Mécanisme de poinçon pour le moule ébaucheur ou finisseur d'une machine de formage d'objets en verre

(30) Priorität: 14.08.1997 DE 19735296
(43) Veröffentlichungstag der Anmeldung: 17.02.1999
(73) Patentinhaber: GPS GLASPRODUKTIONS-SERVICE GMBH, 45329 Essen (DE)
(72) Erfinder: Emrath, Norbert, 45721 Haltern (DE); Ertner, Helmut, 47669 Wachtendonk (DE)
(74) Vertreter: Lelgemann, Karl-Heinz, Dipl.-Ing.

(56) Entgegenhaltungen:
- EP-A- 0 789 002
- EP-A- 0 789 004
- DE-C- 3 816 147
- DE-U- 9 212 648
- PATENT ABSTRACTS OF JAPAN vol. 097, no. 010, 31. Oktober 1997 & JP 09 142853 A (YAMAMURA GLASS CO LTD), 3. Juni 1997

## Beschreibung

Die Erfindung bezieht sich auf einen Pegelmechanismus nach dem Oberbegriff des Patentanspruchs 1.

Aus der EP-A-0 789 004 ist ein Pegelmechanismus für eine Vor- oder Fertigform einer Glasmaschine bekannt, dessen Antrieb mittels eines Servomotors erfolgt, der einen Stator aufweist. Mittels dieses Stators werden Magnete und damit ein mit einem Innengewinde versehenes zylindrisches Element in eine Rotation versetzt, wobei dieses zylindrische Element wiederum eine Stange in eine lineare Auf- und Abwärtsbewegung versetzt; diese Stange trägt den Pegel.

Zur Übertragung bzw. zur Umwandlung der Rotationsenergie in die Linearbewegung werden Rollen eingesetzt, die an der Stange angebracht sind.

Der Servomotor ist koaxial zur Längsachse der Hin- und Herbewegung des Pegelhalters angeordnet, und zwar zwischen der Stelle der Kraftübertragung zwischen Mutter und Spindel des Spindeltriebs und dem Pegel. Hierdurch ergibt sich in diesem hinsichtlich des beschränkten Raumangebots ohnehin kritischen Bereich zum einen ein naturgemäß erhöhter Raumbedarf für die Art und Weise der Ausgestaltung der Kraftübertragung auf den Pegelhalter, wobei darüber hinaus aufgrund der im Falle des Pegelmechanismus gemäß der EP-A-0 789 004 vorgenommenen Anordnung des Servomotors die mechanischkonstruktive Ausgestaltung der Antriebsenergieübertragungseinrichtung vergleichsweise kompliziert ist.

Der Erfindung liegt die Aufgabe zugrunde, den eingangs geschilderten gattungsgemäßen Pegelmechanismus für eine Voroder Fertigform einer Glasmaschine derart weiterzubilden, daß unter erheblicher Platzeinsparung in demjenigen räumlichen Bereich des Pegelmechanismus, in dem die zur Verfügung gestellte Antriebsenergie auf den Pegelhalter übertragen wird, eine konstruktiv-technisch zuverlässigere und weniger aufwendige Übertragung der Antriebsenergie vom Servomotor auf den Pegelhalter möglich ist.

Diese Aufgabe wird erfindungsgemäß dadurch gelöst, daß der Servomotor auf einer Verlängerung der Längsachse der Linearbewegung des Pegelhalters auf der dem Pegelhalter abgewandten Seite des axialfesten Mutterglieds des Spindeltriebs angeordnet ist.

Durch die erfindungsgemäße Anordnung des Servomotors kann der Raumbedarf für den Pegelmechanismus insgesamt, und insbesondere in einem aufgrund des beschränkten Raumangebots besonders kritischen Bereich erheblich reduziert werden. Der Servomotor ist mittels des Spindeltriebes in Antriebsverbindung mit dem Pegelhalter. Im Spindeltrieb wird die vom Servomotor erzeugte Drehbewegung in die für die Bewegung des Pegelhalters erforderliche Linearbewegung umgesetzt, wobei sich das hin- und herbewegliche Glied des Spindeltriebes auf einer Verlängerung der Längsachse der Hin- und Herbewegung des Pegelhalters bewegt.

Es hat sich als besonders vorteilhaft erwiesen, einen derartigen Spindeltrieb als Hubspindeltrieb und diese als Kugelgewindetrieb auszubilden, wobei die hin- und herbewegliche Hubspindel fest mit dem Pegelhalter verbunden ist. Der Einsatz eines Kugelgewindetriebs hat einen auf einen Bruchteil reduzierten Reibwert des Hubspindeltriebs zur Folge, womit ein hoher Wirkungsgrad, die Vermeidung eines sog. Stick-Slip-Effekts, eine geringe Erwärmung, ein geringer Verschleiß, höhere mögliche Drehzahlen, eine lange Lebensdauer und eine gleichbleibende Genauigkeit einhergehen.

Vorteilhaft ist das Mutterglied des Hubspindeltriebs in den Rotor des Servomotors eingebaut. Die Hubspindel ist linear durch den Servomotor bewegbar. Somit steht die Hubspindel rotatorisch fest, während das Mutterglied die Drehbewegung vollzieht und damit die Hubspindel linear durch den Motor bewegt.

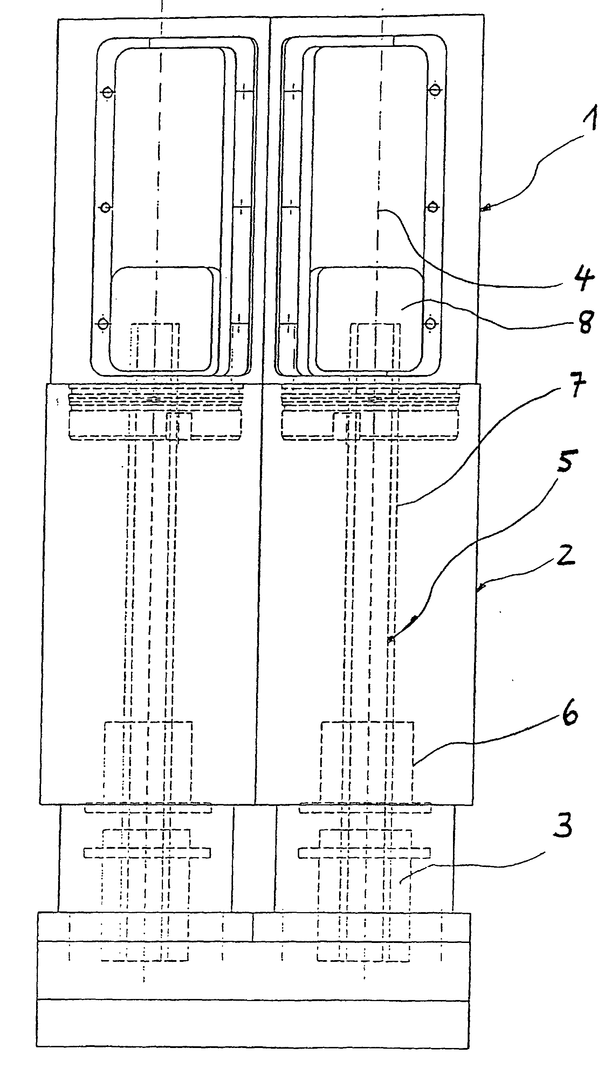

Im folgenden wird die Erfindung an Hand eines Ausführungsbeispiels unter Bezugnahme auf die Zeichnung näher erläutert, in der die für die Erfindung wesentlichen Teile eines Pegelmechanismus prinzipiell dargestellt sind.

Ein hinsichtlich seiner für die Erfindung wesentlichen Bauteile in der einzigen Figur prinzipiell dargestellter Pegelmechanismus gliedert sich in einen oberen Pegelzylinder 1 und einen unteren Pegelzylinder 2.

Dem unteren Pegelzylinder 2 ist ein Servomotor 3 zugeordnet, mittels dem die Antriebsenergie zur Hin- und Herbewegung des in der einzigen Figur nicht dargestellten Pegelhalters erzeugbar ist. Der Servomotor 3 ist in einer Verlängerung der Längsachse 4 der Hin- und Herbewegung des in der einzigen Figur nicht dargestellten Pegelhalters angeordnet.

Zwischen dem Servomotor 3 und dem in der Figur nicht dargestellten Pegelhalter ist ein Hubspindeltrieb 5 vorgesehen, mittels dem die seitens des Servomotors 3 erzeugte Rotationsenergie in die Hin- und Herbewegung des Pegelhalters umwandelbar ist.

Der Hubspindeltrieb 5 hat ein Mutterglied 6, auf das die Rotationsenergie des Servomotors 3 übertragen wird. Das Mutterglied 6 ist in Axialrichtung des Hubspindeltriebs 5 innerhalb des unteren Pegelzylinders 2 fixiert. Zu diesem Zweck ist in den Rotor des Servomotors 3 das Mutterglied 6 eingebaut. Das Mutterglied 6 wird von einer Hubspindel 7 des Hubspindeltriebs 5 durchgriffen, welche rotationsfest innerhalb des unteren Pegelzylinders 2 angeordnet ist und welche aufgrund des Gewindeeingriffs mit dem Mutterglied 6 des Hubspindeltriebs 5 bei einer Rotation des Mutterglieds 6 eine Längsbewegung ausführt. Durch diese Ausgestaltung wird erreicht, daß die Hubspindel 7 rotatorisch feststeht, während das Mutterglied 6 die Drehbewegung vollzieht und damit die Hubspindel 7 linear durch den Servomotor 3 bewegt. Je nach Drehrichtung des Servomotors 3 bzw. des Mutterglieds 6 bewegt sich die Hubspindel 7 des Hubspindeltriebs 5 in der einzigen Figur auf- oder abwärts.

Als besonders vorteilhaft erweist sich bei dieser Ausgestaltung mit dem rotierenden Mutterglied 6, daß auf einer feststehenden Gewindespindel mehrere Vorschubeinheiten angebracht werden können, die völlig unabhängig voneinander im Rahmen ihrer Bewegungsmöglichkeiten Positionen anfahren können.

An ihrem muttergliedfernen Ende ist die Hubspindel 7 fest mit einem Verbindungsglied 8 verbunden, das in geeigneter Weise mit dem in der einzigen Figur nicht dargestellten Pegelhalter verbunden ist.

Im Betrieb des Servomotors 3 überträgt dieser eine Drehbewegung auf das Mutterglied 6 des Hubspindeltriebs 5. Hierdurch wird die Hubspindel 7 des Hubspindeltriebs 5 in eine Aufwärts- oder Abwärtsbewegung versetzt, welche aufgrund der Verbindung der Hubspindel 7 über das Verbindungsglied 8 mit dem in der Figur nicht dargestellten Pegelhalter zu einer Auf- oder Abwärtsbewegung des Pegelhalters und damit des Pegels der Vor- oder Fertigform der Glasmaschine führt.

Der Hubspindeltrieb 5 ist gemäß einer vorteilhaften Ausführungsform der Erfindung als Kugelgewindetrieb ausgebildet. Hierdurch ist es möglich, die Antriebsenergieübertragung zwischen dem Servomotor 3 und dem in der Figur nicht dargestellten Pegelhalter möglichst reibungsarm und mit großer Schnelligkeit durchzuführen. Aufgrund der exakten Regelbarkeit des Servomotors 3 kann die für den Pegelhalter bzw. den Pegel vorgegebene Bewegung hinsichtlich ihres Ablaufs mit großer Exaktheit durchgeführt werden. Darüber hinaus kann mittels einfacher Änderung der Programmierung eines Steuerteils des Servomotors 3 die Auf- und Abwärtsbewegung des Pegelhalters bzw. des Pegels an unterschiedliche Anforderungen angepaßt werden.

## Patentansprüche

1. Pegelmechanismus für eine Vor- oder Fertigform einer Glasmaschine, mit einem Pegelhalter, der in Längsrichtung der Vor- oder Fertigform hin- und herbewegbar ist, einem Servomotor (3), mittels dem die Antriebsenergie für die Bewegung des Pegelhalters erzeugbar und der koaxial zur Längsachse (4) der Hin- und Herbewegung des Pegelhalters angeordnet ist, und einem Spindeltrieb (5), mittels dem die Drehbewegung des Servomotors (3) in die Linearbewegung des Pegelhalters umwandelbar ist und der ein Mutterglied (6) aufweist, welches drehbar und axialfest angeordnet ist, **dadurch gekennzeichnet, daß** der Servomotor (3) auf einer Verlängerung der Längsachse (4) der Linearbewegung des Pegelhalters auf der dem Pegelhalter abgewandten Seite des axialfesten Mutterglieds (6) des Spindeltriebs (5) angeordnet ist.

2. Pegelmechanismus nach Anspruch 1, bei dem der Spindeltrieb als Hubspindeltrieb (5) ausgebildet ist, dessen Hubspindel (7) fest mit dem Pegelhalter verbunden ist.

3. Pegelmechanismus nach Anspruch 2, bei dem der Hubspindeltrieb als Kugelgewindetrieb ausgebildet ist.

4. Pegelmechanismus nach Anspruch 2 oder 3, bei dem das Mutterglied (6) des Hubspindeltriebs (5) in den Rotor des Servomotors (3) eingebaut ist.

5. Pegelmechanismus nach einem der Ansprüche 2 bis 4, dessen Hubspindel (7) linear durch den Servomotor (3) bewegbar ist.

## Claims

1. Plunger mechanism for a parison mould or finishing mould of a glass-forming machine, comprising a plunger support which can be reciprocated in the longitudinal direction of the parison mould or finishing mould, a servomotor (3) by means of which the drive energy for movement of the plunger support can be produced and which is arranged coaxially with the longitudinal axis (4) of the reciprocating motion of the plunger support, and a spindle drive (5) by means of which the rotational motion of the servomotor (3) can be converted into linear motion of the plunger support and which has a nut element (6) which is arranged to be rotatable and axially stationary, **characterised in that** the servomotor (3) is arranged on an extension of the longitudinal axis (4) of the linear motion of the plunger support on that side of the axially stationary nut element (6) of the spindle drive (5) which is remote from the plunger support.

2. Plunger mechanism according to claim 1, wherein the spindle drive is in the form of a lifting spindle drive (5) the lifting spindle (7) of which is fixedly connected to the plunger support.

3. Plunger mechanism according to claim 2, wherein the lifting spindle drive is in the form of a ball screw.

4. Plunger mechanism according to claim 2 or 3, wherein the nut element (6) of the lifting spindle drive (5) is built into the rotor of the servomotor (3).

5. Plunger mechanism according to any one of claims 2 to 4, the lifting spindle (7) of which is movable linearly through the servomotor (3).

## Revendications

1. Mécanisme de réglage de niveau pour un moule d'ébauchage ou un moule de finition dans une machine de verrerie, avec un moyen de maintien de niveau qui peut être déplacé suivant un mouvement de va-et-vient dans la direction longitudinale du moule d'ébauchage ou du moule de finition, avec un servomoteur (3) à l'aide duquel l'énergie d'entraînement pour le déplacement du moyen de maintien de niveau peut être produite et avec un mécanisme à vis (5) à l'aide duquel le mouvement de rotation du servomoteur (3) peut être transformé en un mouvement linéaire du moyen de maintien de niveau et qui présente un écrou (6) monté mobile en rotation mais fixe dans la direction axiale, **caractérisé en ce que** le servomoteur (3) est disposé sur un prolongement de l'axe longitudinal (4) de déplacement linéaire du moyen de maintien de niveau du côté de l'écrou (6) du mécanisme à vis (5) éloigné du moyen de maintien de niveau.

2. Mécanisme de réglage de niveau selon la revendication 1, dans lequel le mécanisme à vis est conformé en mécanisme à vis de lavée (5), dont la vis (7) est liée rigidement au moyen de maintien de niveau.

3. Mécanisme de réglage de niveau selon la revendication 2, dans lequel le mécanisme à vis de levée est conformé en mécanisme à vis à billes.

4. Mécanisme de réglage de niveau selon la revendication 2 ou 3, dans lequel l'écrou (6) du mécanisme à vis de levée (5) est intégré dans le rotor du servomoteur (3).

5. Mécanisme de réglage de niveau selon une des revendications 2 à 4, dont la vis de levée (7) peut être déplacée linéairement par le servomoteur (3).
